# EUROPÄISCHE PATENTSCHRIFT

(11) **EP 1 960 684 B1**
(45) Veröffentlichungstag und Bekanntmachung des Hinweises auf die Patenterteilung: **31.03.2010**
(21) Anmeldenummer: 06828558.4
(22) Anmeldetag: 24.11.2006
(51) Int. Cl.: F16D 65/20

(54) **BREMS- UND / ODER KLEMMVORRICHTUNG FÜR WELLEN**
BRAKING AND/OR LOCKING DEVICE FOR SHAFTS
DISPOSITIF DE FREINAGE ET/OU DE SERRAGE POUR ARBRES

(30) Priorität: 24.11.2005 DE 102005056282
(43) Veröffentlichungstag der Anmeldung: 27.08.2008
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2006/002079
(87) Internationale Veröffentlichungsnummer: WO 2007/059758

(56) Entgegenhaltungen:
- AT-B- 236 517
- DE-A1- 19 901 052
- DE-B- 1 226 708
- FR-A- 550 501

## Beschreibung

Die Erfindung betrifft eine Brems- und/oder Klemmvorrichtung einer in einem Gerätegehäuse oder dem Vorrichtungsgehäuse gelagerten Welle, mit einer auf oder an der Welle drehstarr befestigten Bremsscheibe, wobei die Bremsscheibe einen Anflanschbereich, einen Zwischenbereich und einen - mindestens eine kegelstumpfmantelförmige Reibfläche umfassenden - Reibbereich aufweist, und mit mindestens einem im Vorrichtungsgehäuse angeordneten Bremskonus, an dem die Reibfläche beim Bremsen oder Klemmen zur Anlage kommt.

Eine derartige Vorrichtung ist als Kegelbremse in dem Lehrbuch "Decker Maschinenelemente, Gestaltung und Berechnung", 12. Aufl. von 1995 des Carl Hanser Verlags auf Seite 456 offenbart. Allerdings ist diese Vorrichtung eine Bremsscheibe, deren Zwischenbereich formsteif ausgeführt ist. Auch hat sie nur eine Reibflächenpaarung. Eine vergleichbare Vorrichtung ist auch aus der DE 1 226 708 B bekannt.

Der vorliegenden Erfindung liegt die Problemstellung zugrunde, eine Brems- und/oder Klemmvorrichtung für rotierende Wellen zu entwickeln, die bei großen Klemmkräften und kurzen Reaktionszeiten einen einfachen und bauraumsparenden Aufbau hat und zudem dauerhaft stör- und wartungsfrei ist. Auch sollen die rotierenden Teile der Vorrichtung das Beschleunigungsverhalten der zu bremsenden oder zu klemmenden Welle im ungebremsten Normalbetrieb so wenig wie möglich beeinflussen.

Diese Problemstellung wird mit den Merkmalen des Hauptanspruches gelöst. Dazu hat der Reibbereich der Bremsscheibe eine äußere und eine innere Reibfläche. Der Reibbereich ist gegenüber dem Anflanschbereich über den zwischen Reib- und Anflanschbereich gelegenen zumindest bereichsweise elastischen Zwischenbereich in Axialrichtung verschiebbar. Jede der beiden Reibflächen liegt einem Bremskonus gegenüber. Der Bremskonus ist - zur bremsenden oder klemmenden Belastung und zur lüftenden Entlastung der Bremsscheibe - entweder durch zwei Stellglieder - jeweils eines pro be- und entlastender Betätigungsrichtung - oder durch ein Stellglied für eine Betätigungsrichtung und ein Federsystem mit mindestens einem Federelement für die andere Betätigungsrichtung axial bewegbar.

Bei dieser Brems- und/oder Klemmvorrichtung wird z.B. eine in einem Maschinengehäuse gelagerte Welle abgebremst oder festgeklemmt. Das Gehäuse der Vorrichtung ist hierbei direkt starr am Maschinengehäuse befestigt, so dass der Bremskraftfluss den kürzest möglichen Weg zwischen dem Vorrichtungsgehäuse und dem Maschinengehäuse bzw. Gerätegehäuse hat. Letzteres kann auch nur ein Gestell sein. Ggf. ist das Vorrichtungsgehäuse auch Teil des Maschinengehäuses.

Die Vorrichtung wird beispielsweise im Werkzeugmaschinenbau u.a. in Rundtischen und Getriebespindeln zum direkten Bremsen und/oder Klemmen verwendet. Im Handhabungsgerätebau wird sie auch als Feststeller in Robotergelenken integriert. Ferner kann sie auch indirekt als Schlittenbremse oder -klemmung eingesetzt werden, sofern der Schlitten einen Gewindespindelantrieb oder dergleichen aufweist.

Die Brems- und/oder Klemmvorrichtung wird meist über ein Federsystem betätigt und über einen pneumatischen Antrieb als Stellglied gelöst. Sie kann auf diese Weise z.B. auch als Notbremssystem verschaltet und benutzt werden. Zwischen der zu bremsenden oder zu klemmenden Welle und dem Vorrichtungsgehäuse ist die verwendete Bremsscheibe direkt integriert. Da die Bremsscheibe drehstarr - ohne Spiel - auf der Welle sitzt, kann über das in der Vorrichtung eingebaute Reibgehemme die Welle präzise und ohne Umkehrspiel gehalten werden.

Als Stellglied können u.a. auch hydraulische Zylinder-Kolbeneinheiten, Piezostellglieder oder Formgedächtniselemente verwendet werden. Alle Stellglieder können sowohl für die Be- als auch für die Entlastungsrichtung verwendet werden. Dabei können gleich- oder verschiedenartige Stellglieder pro Belastungsrichtung - hintereinander oder nebeneinander im oder am Gehäuse angeordnet werden. Ferner können die pneumatischen Stellglieder auch mit inertem Gas betrieben werden.

Weitere Einzelheiten der Erfindung ergeben sich aus den Unteransprüchen und der nachfolgenden Beschreibung schematisch dargestellter Ausführungsformen.
- Figur 1:: Dimetrische Darstellung einer Brems- und/oder Klemmvorrichtung ca. in Originalgröße;
- Figur 2:: Längsschnitt zu Figur 1, vergrößert;
- Figur 3:: weiterer Längsschnitt zu Figur 1, ca. Originalgröße;
- Figur 4:: Längsschnitt zu Figur 1, jedoch im Klemmzustand;
- Figur 5:: Teillängsschnitt einer alternativen Brems- und/oder Klemmvorrichtung, vergrößert;
- Figur 6:: Teillängsschnitt einer ausschließlich pneumatisch betätigten Brems- und/oder Klemmvorrichtung, vergrößert;
- Figur 7:: Bremsscheibe mit mehrfach geschlitztem Reib- und Zwischenbereich;
- Figur 8:: wie Figur 7, jedoch in der Rückansicht;
- Figur 9:: Bremsscheibe mit radialen Speichen;
- Figur 10:: Bremsscheibe mit tangentialen Speichen;
- Figur 11:: Ausschnitt des Reibbereichs zu Figur 2;
- Figur 12:: Teillängsschnitt mit Bremsklötzen, vergrößert;
- Figur 13:: vergrößerter Schnitt eines Bremsklotzes;
- Figur 14:: Teil des Ringkolben mit Ringfeder;
- Figur 15:: Ausschnitt zu Figur 14;
- Figur 16:: Ringkolben mit Bremsklötzen.

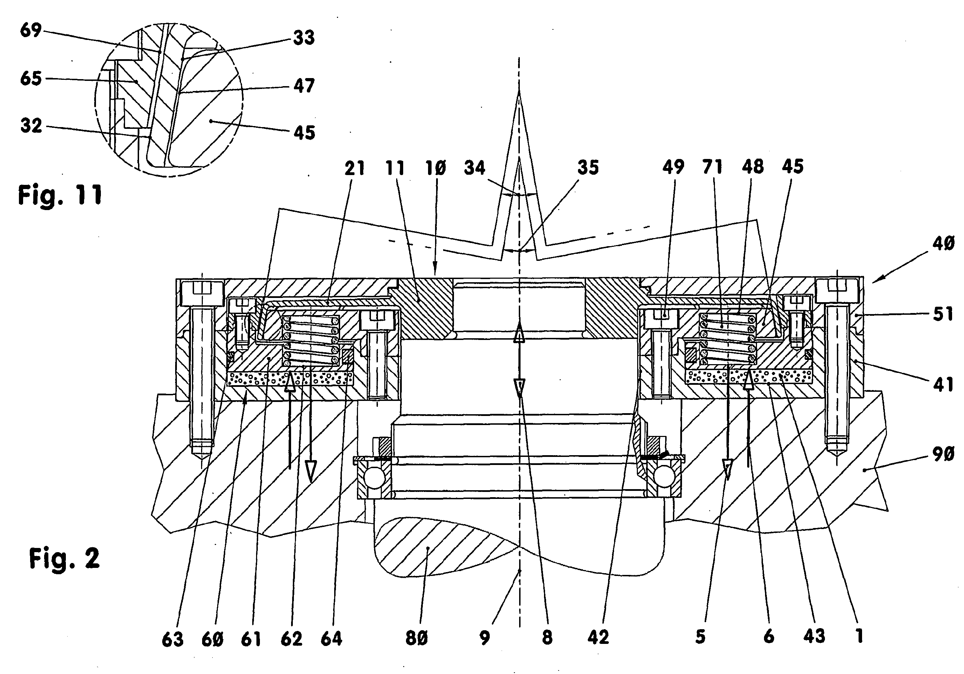

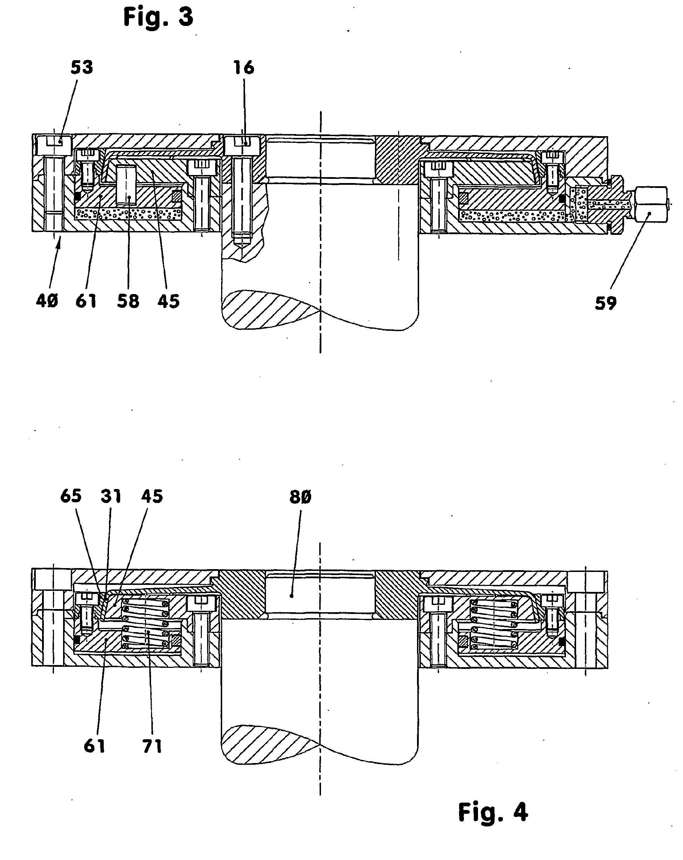

Figur 2 zeigt eine in einem Gerätegehäuse (90) wälzgelagerte Welle (80). Auf dem Wellenende ist stirnseitig eine Bremsscheibe (10) angeflanscht. Die mit einem Reibring (31) ausgestattete Bremsscheibe (10) ist von einem am Gerätegehäuse (90) befestigten Vorrichtungsgehäuse (40) umgeben. Im Vorrichtungsgehäuse (40) befindet sich u.a. ein axial beweglicher Bremskonus (65), der über Federelemente (71) den Reibring (31) der Bremsscheibe (10) - zum z.B. trockenen Bremsen und/oder Klemmen - gegen einen ortsfesten und nicht drehbaren Bremskonus (45) drückt, vgl. auch Figur 4. Die Klemmwirkung kann zur Freigabe der Bremsscheibe (10) beispielsweise mit Hilfe eines pneumatischen Stellgliedes (60) aufgehoben werden.

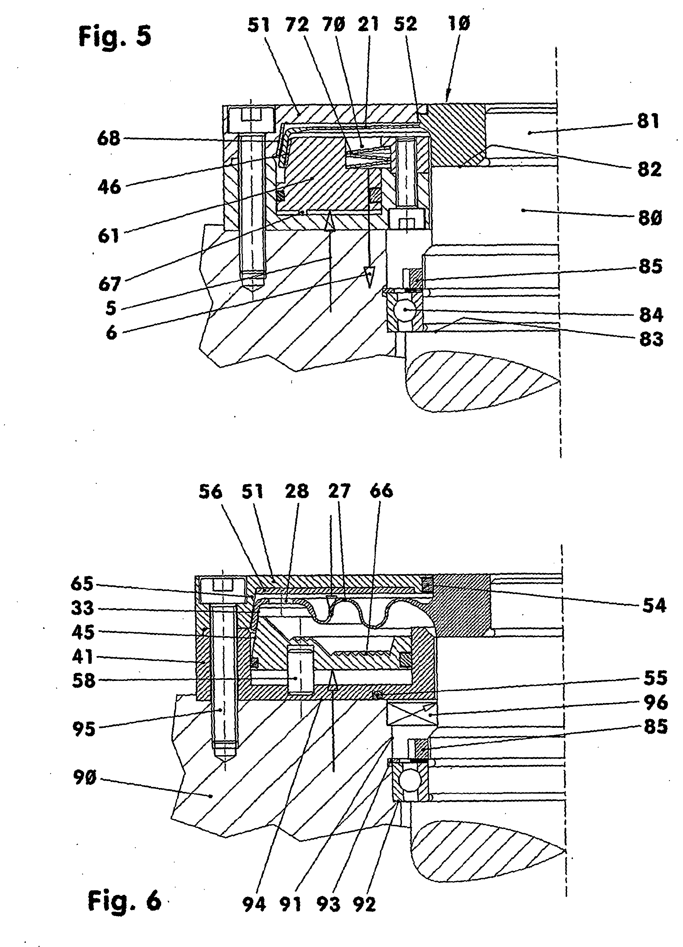

In dem Ausführungsbeispiel nach Figur 2 ist die Welle (80) nahezu spielfrei in dem Gerätegehäuse (90) gelagert, vgl. auch Figuren 5 und 6. Die dargestellte Lagerung zeigt ein Festlager, bei dem das Wälzlager (84) mittels einer, über einen Sicherungsring gesicherten, Wellenmutter (85) gegen einen Bund (83) der Welle (80) fixiert ist. Im Gerätegehäuse (90) sitzt der Außenring des Wälzlagers (84) in einer Stufenbohrung (91) zwischen einem Gehäusebund (92) und der Wellenmutter (85). Somit hat die Welle (80) im Gerätegehäuse (90) nur ein geringes Axialspiel.

Das Gerätegehäuse (90) hat eine zur Wellenmittellinie (9) normale Flanschfläche (94), an der das Vorrichtungsgehäuse (40) z.B. zentriert positioniert und über die Schrauben (95) befestigt ist.

Das Vorrichtungsgehäuse (40) besteht aus einem Grundkörper (41) und einem Gehäusedeckel (51). Beide Teile haben jeweils eine zentrale Durchgangsbohrung (42, 52) zum Durchführen der Welle (80). Der Grundkörper (41) weist einen ringförmigen, konzentrisch zur Bohrung angeordneten Kanal (43) auf. Dieser Ringkanal (43) ist der Zylinder des pneumatischen Stellgliedes (60). Im Ringkanal (43) ist ein Ringkolben (61) eingesetzt. Der Ringkolben (61) ist gegenüber den Kanalwandungen des Ringkanals (43) mit mindestens zwei Dichtringen (63, 64) abgedichtet. Der innere, im Durchmesser kleinere Dichtring (64) hat hierbei einen ca. zwei- bis dreifach größeren Querschnitt als der äußere, größere Dichtring (63). Die radiale Außenfläche des Ringkolbens (61) ist - um ein Verkanten zu vermeiden - sphärisch oder ballig gekrümmt ausgeführt. Der Krümmungsradius entspricht ca. 80% des Ringkolbenaußendurchmessers. Der Krümmungsmittelpunkt liegt z.B. im Bereich der halben Höhe des Ringkolbens (61) oder in der Höhe der Mittelebene des inneren Dichtrings (64).

Auf der druckluftabgewandten Seite des Ringkolbens (61) ist ein ringförmiger Bremskonus (65) angeformt oder zentriert befestigt. Dieser Innenkonus (65) hat eine kegelstumpfmantelförmige Reibfläche (69). Die theoretische Spitze des Kegelstumpfes liegt in Richtung der bremslösenden Betätigungsrichtung (6) außerhalb des Vorrichtungsgehäuses (40) auf der Mittellinie (9).

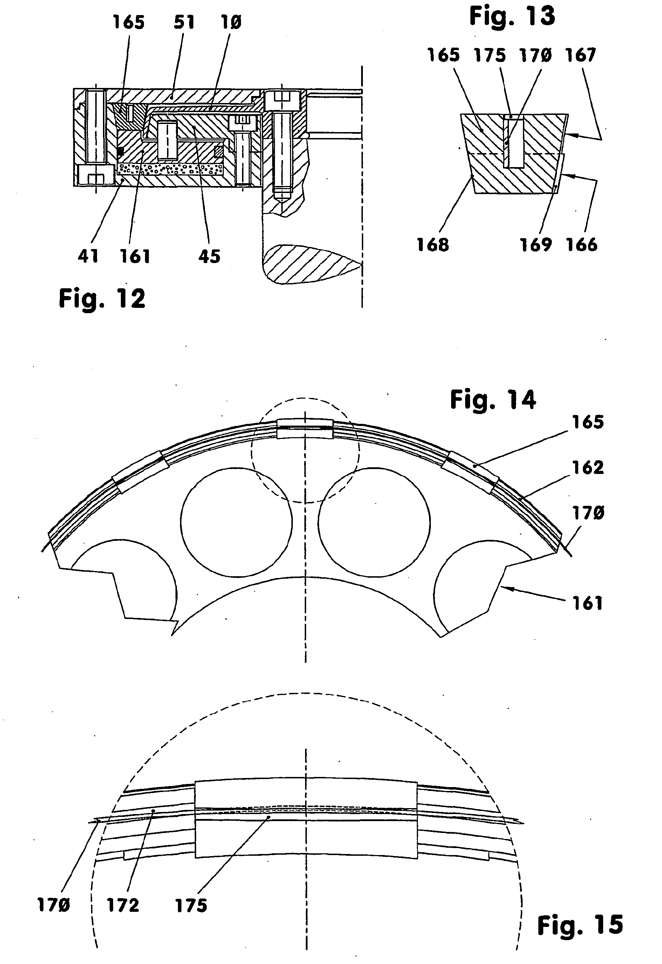

Der Bremskonus (65) kann ggf. auch aus einzelnen Segmenten bestehen, vgl. auch Figuren 12 bis 15. Zwischen den einzelnen Segmenten können Zwischenräume liegen, die länger sind als die Segmente selbst.

Des Weiteren hat der Ringkolben (61) auf der druckluftabgewandten Seite mehrere Sacklochbohrungen (62) zur Aufnahme von Schraubendruckfedern (71). Die Sacklochbohrungen (62), es können z.B. 3 bis 12 Bohrungen sein, liegen alle - äquidistant verteilt - auf einem Kreis um die Mittellinie (9).

Auf dem zwischen dem Ringkanal (43) und der Welle (80) liegenden Gehäusebereich ist ein weiterer Bremskonus (45) über die Schrauben (49) befestigt. Dieser Außenkonus (45) hat die Form einer zentral gelochten Scheibe. Seine radial außenliegende Wandung bzw. Reibfläche (47) entspricht dem Mantel eines Kegelstumpfes. Auch die theoretische Spitze dieses Kegelstumpfes liegt in Richtung der bremslösenden Betätigungsrichtung (6) außerhalb des Vorrichtungsgehäuses (40) auf der Mittellinie (9) der Welle (80). Die Kegelwinkel (34, 35) der Reibflächen (69, 47) sind nach den Ausführungsbeispielen identisch.

Die Reibflächen (47, 69) der nicht rotierenden Bremskonen (45, 65) können ggf. mit speziellen Bremsbelägen (46, 68), vgl. Figur 5, oder mit vergleichbaren Beschichtungen ausgestattet sein. Auch nur eine Reibfläche kann mit einem Belag versehen werden.

Dem Ringkolben (61) zugewandt hat der Bremskonus (45) mehrere Sacklochbohrungen (48). Diese Bohrungen liegen gegenüber den Sacklochbohrungen (62) des Ringkolbens (61).

In Figur 3 sind in der linken Figurenblatthälfte weitere Sacklochbohrungen im Ringkolben (61) und dem Bremskonus (45) zu erkennen. Sie lagern einen Bolzen (58), der als Verdrehsicherung des Ringkolbens (61) gegenüber dem Vorrichtungsgehäuse (40) dient. Dazu ist der Bolzen (58) im ortsfesten Bremskonus (45) fest eingepresst, während er mit Spiel in die Bohrung des Ringkolbens (61) hineinragt.

Auf dem Grundkörper (41) sitzt zentriert der z.B. scheibenförmige Gehäusedeckel (51). Letzterer ist am Grundkörper (41) mittels der Deckelschrauben (53) fixiert, vgl. Figur 3. Die mehrfach gestufte Durchgangsbohrung (52) hat gegenüber den rotierenden Teilen (10, 80) der Vorrichtung die Funktion einer reibungsfreien Labyrinthdichtung.

Das dargestellte Ende der Welle (80) hat einen Wellenbund (82), auf dem die Bremsscheibe (10) gelagert und befestigt ist. Die Bremsscheibe (10) hat dazu einen ringförmigen Anflanschbereich (11) mit mehreren Befestigungsbohrungen (15). Über die zentrale Bohrung (12) dieses Bereichs sitzt die Bremsscheibe (10) zentriert auf dem Wellenzapfen (81). Über die in den Bohrungen (15) sitzenden Schrauben (16) ist sie axial fixiert. Die Mittellinien der Bohrungen (15) liegen parallel zur Mittellinie (9).

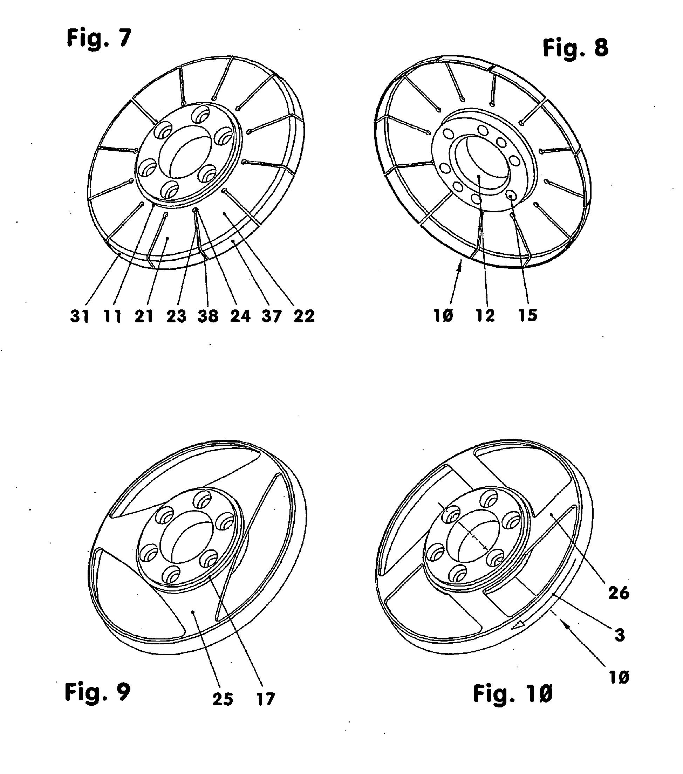

An den Anflanschbereich (11) schließt sich der beispielsweise scheibenförmige, einen Reibbereich (31) tragende, Zwischenbereich (21) an. In der Übergangszone zwischen diesen Bereichen (11, 21) hat der Anflanschbereich (11) eine gestufte Auβenkontur (17), vgl. Figur 9. Letztere entspricht weitgehend der Innenkontur der mehrfach gestuften Bohrung (52) des Gehäusedeckels (51). Die radial gemessene Spaltbreite dieser Dichtfuge beträgt z.B. ca. 0,2 Millimeter. Im Idealfall trifft dies auch auf die axiale Spaltbreite zu.

Der Reibbereich (31) hat nach den Figuren 7 und 8 die Hüllkontur eines Ringes, dessen radiale Außen- und Innenwandung kegelstumpfmantelförmig gestaltet ist. Diese Wandungen sind die Reibflächen (32,33). Ihre Kegelwinkel (34, 35), vgl. Figur 2 sind nur beispielhaft gleich groß. Die Kegelwinkel (34, 35) messen in den Ausführungsbeispielen 20 Winkelgrade. Die Wandstärke des Reibbereiches (31) beträgt im Konstruktionszustand z.B. einen Millimeter. Der Reibbereich (31) kann ggf. eine Beschichtung mit hohem Reibwert aufweisen. Bei beiden Reibpaarungen Reibbereich(31)/äußerer Bremskonus (65) und Reibbereich (31)/innerer Bremskonus (45) können vergleichbare oder unterschiedliche Material- und Reibwertkombinationen benutzt werden.

Alternativ können bei Vorrichtungen, sofern sie nur bei stehender Welle zum Klemmen verwendet werden, die einander kontaktierenden Reibflächen mindestens einer Reibflächenpaarung mit einer verzahnungsartigen Rillung, z.B. vergleichbar mit einer Hirthverzahnung, versehen werden. Bei kleiner Rillungsteilung sind hierbei benachbarte Klemmpositionierungen möglich, die die Welle in Winkelbereichen unter einem Winkelgrad weiterpositionieren lassen.

Für den zwischen dem Reibbereich (31) und dem Anflanschbereich (11) gelegenen Zwischenbereich (21) gibt es unzählige Konstruktionsvarianten, von denen hier nur wenige vorgestellt werden. Der Zwischenbereich (21) hat die Aufgabe, den axialen Versatz des Reibbereichs (31) gegenüber der Wellenposition bzw. gegenüber dem Anflanschbereich (11) auszugleichen, vgl. Figur 4. In dieser Figur ist die Vorrichtung mit geklemmter Welle (80) dargestellt. Der außenliegende Bremskonus (65) zieht über den federbelasteten Ringkolben (61) den Reibbereich (31) gegen den inneren Bremskonus (45). Die Konen (45, 65) klemmen als Keilgetriebe den Reibbereich (31) ein. Der axiale Versatz beträgt bei den dargestellten Varianten ca. 0,75 Millimeter. Bei einem fortgeschrittenen Verschleiß der Reibflächen kann er auf einen Millimeter anwachsen. Je nach Materialwahl und Zwischenbereichsform sind bei Bremsscheiben dieser Größenordnung axiale, elastische Versätze von bis zu 3 Millimetern denkbar.

Der mittlere Wirkdurchmesser des Reibbereichs (31) ändert sich bei seiner axialen Reibbereichsverlagerung nur unwesentlich.
Dieser Einfluss lässt sich durch ein Verwenden von tangential angeordnete Speichen (26) noch minimieren, vgl. Figur 10. Die minimale radiale Längenverkürzung des Abstandes zwischen den Bereichen (11, 31) wird - zumindest im Stillstand - durch ein "Aufdrehen" der Tangentialspeichen (26) ausgeglichen. Eine Bremsscheibe (10) mit Tangentialspeichen (26) klemmt die Welle in der Verdrehrichtung (3) mit höherer Steifigkeit als bei einer Drehung in Gegenrichtung.

Die in Figur 9 abgebildete Bremsscheibe (10) hat radiale Speichen (25). Deren Steifigkeit ist drehrichtungsunabhängig. Die Speichen (25) sind zum Nabenbereich hin z.B. um den Faktor 3 verbreitert. Die symmetrische Verbreiterung ermöglicht eine sehr hohe Verdrehsteifigkeit.

In der Figur 5 ist eine Bremsscheibe (10) dargestellt, bei der der Zwischenbereich (21) ein vollflächiger, dünnwandiger Kreisring ist. Die Wandstärke des Zwischenbereichs (21) liegt z.B. unter der halben Reibbereichswandstärke. Der Zwischenbereich (21) hat global die Form eines Kegelstumpfmantels. Der Kegelwinkel beträgt z.B. 178 Winkelgrade. Die theoretische auf der Mittellinie (9) gelegene Kegelspitze ist vom Ringkolben (61) weg orientiert. Ggf. kann der Zwischenbereich (21) auch plan oder in die andere Richtung gewölbt sein. U.a. durch die glatte Kontur des Zwischenbereiches (21) kann diese Bremsscheibe geräuscharm für Wellendrehzahlen oberhalb von 2000 U/min eingesetzt werden.

Auch der Zwischenbereich (27) der Bremsscheibe (10) aus Figur 6 ist vollflächig. Allerdings hat er im Querschnitt die Form einer Welle. Die Flächenkontur ist vergleichbar mit der Metallmembran eines Manometers. Dieser Zwischenbereich (27) ist in Axialrichtung (8) besonders nachgiebig. Große axiale Versätze mit geringem Verformungswiderstand sind hier realisierbar. Im Übergangsbereich zum Reibbereich (31) sind z.B. auf einem Kreis mehrere Bohrungen (28) verteilt, über die bei der Variante nach Figur 6 zum Lösen der Bremse oder Klemmung Druckluft strömt.

Die Figuren 7 und 8 zeigen eine Bremsscheibe (10), wie sie in den Vorrichtungen nach den Figuren 2-4 eingebaut ist. Der Zwischenbereich (21) und der Reibbereich (31) sind durch radiale Schlitze (23, 38) in z.B. 12 kreisringstückförmige Segmente (22, 37) aufgeteilt. Die Schlitze (23, 38) enden im Übergangsbereich zum Anflanschbereich (11) in kleinen Bohrungen (24) zur Minderung auftretender Kerbspannungen. Die geschlitzte Bremsscheibe (10) wird für einen Wellendrehzahlbereich unter 1000 Umdrehungen/Minute verwendet. Das durch Klemmen spielfrei zu haltende Drehmoment liegt im Bereich von 150 ... 200 Nm.

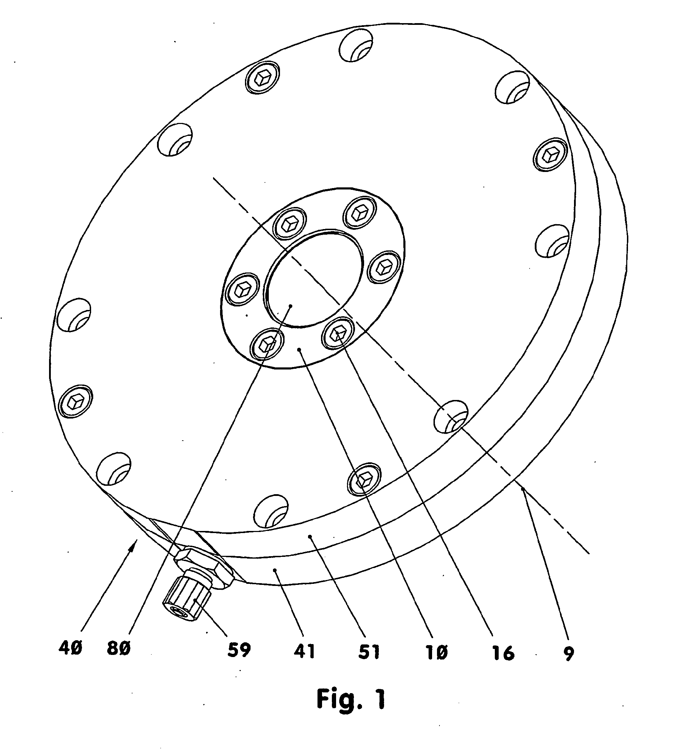

Die unverschlissene Bremsscheibe (10) hat bei nicht betätigter Klemmung im Vorrichtungsgehäuse (40) gegenüber dem außenliegenden Bremskonus (65) - nach Figur 1 - einen Lüftspalt von z.B. 0,3 mm Breite. Der Lüftspalt zwischen dem Reibbereich (31) und dem innenliegenden Bremskonus (45) beträgt ca. 1,5 mm.

Im Vorrichtungsquerschnitt nach Figur 3 ist als zusätzliche Information der Pneumatikanschluss (59) der Zylinderkolbeneinheit zu erkennen. Danach ist der Ringkolben (61) Teil eines einfachwirkenden Zylinders. Mit einer Druckluftbeaufschlagung wird hier die Bremse bzw. Klemmung entgegen der Wirkung der Federelemente in der gelösten Position gehalten. Bei einem Abschalten oder Unterbrechen der Druckluftzufuhr drücken die Federelemente (71) den Ringkolben (61) nach unten, vgl. Figur 4. Hierbei zieht der Ringkolben (61) den Bremskonus (65) gegen den Reibabschnitt (31). Letzterer wird dadurch zum entgültigen Klemmen gegen den Bremskonus (45) gedrückt.

In seiner unteren Position liegt der Ringkolben (61) z.B. über drei nicht dargestellte, an seiner druckluftbeaufschlagbaren Stirnseite angeordnete, Nocken am Boden des Ringkanals (43) auf. Ggf. hat die Kolbenstirnseite anstelle der Nocken auch eine beispielsweise unterbrochene ringförmige Anformung (67), vgl. Figur 5.

In den Figuren 5 und 6 werden Vorrichtungen gezeigt, bei denen der äußere Bremskonus, vgl. Reibbelag (68) ein Teil des Gehäusedeckels (51) ist, während der innere Bremskonus, vgl. Reibbelag (46) ein Teil der Außenkontur des Ringkolbens (61) ist. In beiden Vorrichtungen wird zum Bremsen und/oder Klemmen der Ringkolben (61) pneumatisch in Richtung auf den Gehäusedeckel (51) zubewegt. Zum Lösen der Bremse bzw. Klemmung wird nach Figur 5 ein Paket wechselweise gestapelter Tellerfedern (72) benutzt.

Nach Figur 6 wird hierfür Druckluft verwendet, die beispielsweise über den Gehäusedeckel (51) zugeführt wird. Dazu müssen zwischen den rotierenden Teilen (10, 80) und dem Vorrichtungsgehäuse (40) durch mindestens zwei Dichtungen (54, 96) abgedichtet werden. Zusätzlich wird ein O-Ring (55) zwischen dem Grundkörper (41) und dem Gerätegehäuse (90) benötigt.

Bei schnelldrehenden Wellen (80) können im Vorrichtungsgehäuse (40) störende Strömungsgeräusche entstehen. Um diese Störgeräusche zu dämpfen und/oder zu dämmen, ist nach Figur 6 zum einen im Gehäusedeckel (51) ein Absorbereinsatz (56) eingeklebt. Er ist beispielsweise aus einem offenzelligen porösen Material hergestellt. Zusätzlich ist die der Bremsscheibe zugewandte Kolbenstirnseite mit einer großvolumigen Ausnehmung ausgestattet. Die Oberfläche ist zur Schallbrechung mit einer Rillung (66) versehen.

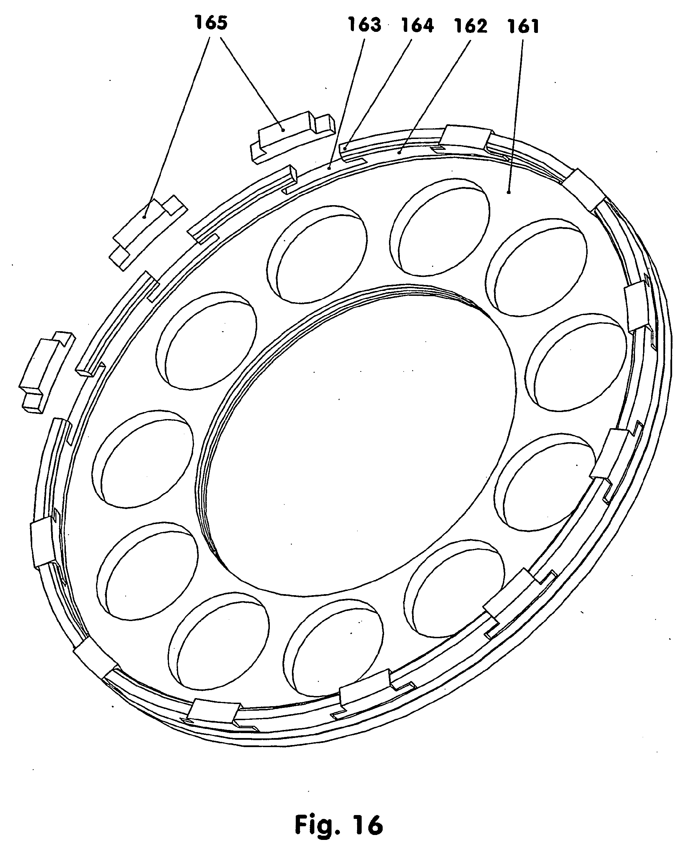

In den Figuren 12 bis 16 ist eine Brems- und/oder Klemmvorrichtung gezeigt, die eine ungeschlitzte Bremsscheibe (10) hat. Anstelle eines ringförmigen, auf den Ringzylinder (61) aufgeschraubten Bremskonus (65), vgl. Figur 2, hat die Vorrichtung einen Ringzylinder (161) mit eingelegten Bremsklötzen (165), vgl. Figur 15.

Die Bremsklötze (165) sitzen in T-nutenförmigen Ausnehmungen (163) eines zum Gehäusedeckel (51) hin ragenden Randes (162) des Ringkolbens (161), vgl. Figur 12. In den Ausnehmungen (163) können sich die Bremsklötze (165) mehrere Zehntel Millimeter radial bewegen. In Umfangsrichtung sitzen sie (165) mit geringem Spiel in den Ausnehmungen (163).

Der einzelne Bremsklotz (165) hat nach Figur 12 und 13 einen trapezförmigen Querschnitt. Der Querschnitt ist seitlich begrenzt durch zwei Reibflächen, eine innere (169) und eine äuβere (168). Die innere Reibfläche (169) kommt beim Bremsen und/oder Klemmen an der Bremsscheibe (10) zur Anlage, während sich die äußere Reibfläche (168) an der Innenwandung des Grundkörpers (41) anlegt. Beide Reibflächen (168, 169) haben jeweils beispielsweise eine kegelmantelstumpfförmige Fläche, wobei die jeweilige Neigung der einzelnen Reibfläche (168, 169) mit der Mittellinie (9), vgl. Figur 2, einen Winkel von 10 Winkelgraden einschließt.

Jeder Bremsklotz (165) hat einen oberen (167) und einen unteren Bereich (166). Der untere Bereich (166) ist länger als der obere Bereich (167) ausgeführt. Der jeweils überstehende Anteil des unteren Bereiches (166) hintergreifft die überstehend auskragenden Stege (164) des Randes (162). An seiner Oberseite hat jeder Bremsklotz (165) z.B. eine gerade Nut (175), in der eine Ringfeder (170) liegt. Die Ringfeder (170) ist z.B. ein offenes oder geschlossenes, elastisches Metallband aus Federstahl, vgl. Figur 13 und 14. Sie liegt im Ringkolbenrand (162) in der Ringfedernut (172).

Beim Bremsen und/oder Klemmen wird der Ringkolben (161) nach unten gedrückt. Hierbei zieht der Ringkolben (161) die Bremsklötze (165) nach unten. Letztere bewegen sich entgegen der Federwirkung der Ringfeder (170) radial nach innen und verkeilen sich dabei zwischen dem Grundkörper (41) und der Bremsscheibe (10) bzw. dem Bremskonus (45), vgl. auch Figur 15. Die Lage der unverformten Ringfeder (170) ist dort im Bereich der Nut (175) gestrichelt dargestellt.

Alle gezeigten Bremsscheiben haben elastisch verformbare, aus einem Stück gefertigte Zwischenbereiche. Alternativ können die Zwischenbereiche kraft-, form- oder stoffschlüssig in die Bremsscheibe integriert werden, z.B. wenn der Werkstoff des Zwischenbereichs sich vom Werkstoff des Reibbereichs oder des Anflanschbereichs unterscheiden soll. Ggf kann der Zwischenbereich auch zusätzlich Federelemente aufweisen, die u.a. das Zurückfedern des Reibbereichs nach dem Klemmen unterstützen.

### Bezugszeichenliste:

- 1: Luft, Gas
- 3: Wellendrehrichtung
- 5: Betätigungsrichtung, bremsend, belastend
- 6: Betätigungsrichtung, bremslösend, entlastend
- 8: Axialrichtung
- 9: Mittellinie der Vorrichtung und der Welle (80)

- 10: Bremsscheibe
- 11: Anflanschbereich
- 12: Bohrung, zentral
- 15: Befestigungsbohrungen
- 16: Schrauben
- 17: Außenkontur, gestuft

- 21: Zwischenbereich, elastisch
- 22: Segmente, Kreisringstückform, Speichen
- 23: Schlitze
- 24: Bohrungen an Schlitzenden

- 25: Speichen, radial,
- 26: Speichen, tangential
- 27: Wellenprofil-Zwischenbereich
- 28: Bohrungen

- 31: Reibbereich
- 32: Reibfläche, außen, kegelstumpfmantelförmig
- 33: Reibfläche, innen, kegelstumpfmantelförmig
- 34: Kegelwinkel, außen
- 35: Kegelwinkel, innen
- 37: Segmente
- 38: Schlitze

- 40: Vorrichtungsgehäuse
- 41: Grundkörper
- 42: Durchgangsbohrung
- 43: Ringkanal, Zylinder

- 45: Bremskonus, Außenkonus; innen
- 46: Reibbelag an Außenfläche
- 47: Reibfläche
- 48: Sacklochbohrungen für (71)
- 49: Schrauben für Bremskonus (45)

- 51: Gehäusedeckel
- 52: Stufenbohrung, Durchgangsbohrung
- 53: Deckelschrauben
- 54: Dichtring (Deckel/Welle)
- 55: O-Ring (Vorrichtungsgehäuse/Gerätegehäuse)
- 56: Absorbereinsatz
- 58: Bolzen (Verdrehsicherung)
- 59: Pneumatikanschluss

- 60: Stellglied, Zylinderkolbeneinheit
- 61: Kolben, Ringkolben
- 62: Sacklochbohrungen für Federn
- 63: Dichtungsring, groß
- 64: Dichtungsring, klein
- 65: Bremskonus, Innenkonus; außen
- 66: Rillung in Ausnehmung, ringförmig
- 67: Anformung, Anschlag,
- 68: Reibbelag an Innenfläche
- 69: Reibfläche

- 70: Federsystem
- 71: Schraubendruckfedern, Federelement
- 72: Tellerfedern, Federelement

- 80: Welle
- 81: Wellenzapfen
- 82: Wellenbund für Bremsflansch
- 83: Wellenbund für Wälzlager
- 84: Wälzlager
- 85: Wellenmutter

- 90: Gerätegehäuse
- 91: Stufenbohrung
- 92: Gehäusebund
- 93: Sicherungsring
- 94: Flanschfläche
- 95: Befestigungsschrauben
- 96: Wellendichtring

- 161: Ringkolben
- 162: Ringkolbenrand
- 163: Ausnehmungen
- 164: Stege, auskragend
- 165: Bremsklötze
- 166: unterer Bereich
- 167: oberer Bereich
- 168: Reibfläche, außen
- 169: Reibfläche, innen

- 170: Ringfeder
- 172: Ringfedernut in (162)
- 175: Nut in (165)

## Patentansprüche

1. Brems- und/oder Klemmvorrichtung einer in einem Gerätegehäuse (90) oder dem Vorrichtungsgehäuse (40) gelagerten Welle (80),
- mit einer auf oder an der Welle (80) drehstarr befestigten Bremsscheibe (10), wobei die Bremsscheibe (10) einen Anflanschbereich (11), einen Zwischenbereich (21) und einen - mindestens eine kegelstumpfmantelförmige Reibfläche (32) umfassenden - Reibbereich (31) aufweist,
- und mit mindestens einem im Vorrichtungsgehäuse (40) angeordneten Bremskonus (45), an dem die Reibfläche (32) beim Bremsen oder Klemmen zur Anlage kommt,
**dadurch gekennzeichnet,**
- **dass** der Reibbereich (31) eine äußere (32) und eine innere Reibfläche (33) hat,
- **dass** der Reibbereich (31) gegenüber dem Anflanschbereich (11) über den zwischen diesen Bereichen (11, 31) gelegenen zumindest bereichsweise elastischen Zwischenbereich (21) in Axialrichtung (8) verschiebbar ist,
- **dass** jede der beiden Reibflächen (32, 33) einem Bremskonus (65, 45) gegenüberliegt,
- **dass** der Bremskonus ((65) oder (45)) - zur bremsenden oder klemmenden Belastung und zur lüftenden Entlastung der Bremsscheibe (10) - entweder durch zwei Stellglieder - jeweils eines pro be- und entlastender Betätigungsrichtung - oder durch ein Stellglied (60) für eine Betätigungsrichtung und ein Federsystem (70) mit mindestens einem Federelement (71, 72) für die andere Betätigungsrichtung axial bewegbar ist.

2. Vorrichtung gemäß Anspruch 1, **dadurch gekennzeichnet, dass** der Zwischenbereich (21) der Bremsscheibe (10) aus elastischen Speichen (22, 25, 26) besteht.

3. Vorrichtung gemäß der Ansprüche 1 oder 2, **dadurch gekennzeichnet, dass** der Reibbereich (31) der Bremsscheibe (10) aus einzelnen Segmenten (37) besteht, wobei die zwischen den Segmenten (37) liegenden Schlitze (38) die gleiche Teilung haben wie die Schlitze (23) zwischen den Speichen (22).

4. Vorrichtung gemäß Anspruch 1, **dadurch gekennzeichnet, dass** beide Reibflächen (32, 33) der Bremsscheibe (10) den gleichen Kegelwinkel (34, 35) haben.

5. Vorrichtung gemäß Anspruch 1, **dadurch gekennzeichnet, dass** der Kegelwinkel (34, 35) zwischen 10 und 30 Winkelgraden liegt.

6. Vorrichtung gemäß Anspruch 1, **dadurch gekennzeichnet, dass** die innere Reibfläche (33) des Reibbereiches (31) gegenüber dem, am Vorrichtungsgehäuse (40) befestigten, inneren Bremskonus (45) liegt.

7. Vorrichtung gemäß Anspruch 6, **dadurch gekennzeichnet, dass** der relativ zum Vorrichtungsgehäuse (40) bewegliche Bremskonus (65) mittels eines mechanischen Federsystems (70) in der Brems- und/oder Klemmposition gehalten wird.

8. Vorrichtung gemäß Anspruch 6, **dadurch gekennzeichnet, dass** das zur lüftenden Entlastung der Bremsscheibe (10) verwendete Stellglied (60) eine pneumatische Zylinderkolbeneinheit ist.

9. Vorrichtung gemäß Anspruch 6 und 8, **dadurch gekennzeichnet, dass** der bewegliche Bremskonus (65) Teil des Kolbens (61) der Zylinderkolbeneinheit (60) ist.

## Claims

1. Braking and/or blocking device of a shaft (80) lodged in an equipment casing (90) or in the device casing (40)
- with a braking disk (10) that is affixed with torsional stiffness to or against said shaft (80), whereby said braking disk (10) is comprised of a flanging area (11), an intermediate area (21) and a friction area (32) with at least one friction surface (32) in the form of a truncated cone,
- - and with at least one brake cone (45) located inside said equipment casing (40) against which said friction surface (32) comes to rest in case of braking or blockage,
wherein
- said friction area (31) displays an outer (32) and an inner friction surface (33),
- said friction area (31) can move along the axis (8) in relation to said flanging area (11) via the intermediate area (21) lying between said two areas (11, 31), which is at least partially flexible,
- each of both friction surfaces (32, 33) faces a brake cone (65, 45),
- said brake cone ((65) or (45)) - used to either exercise a braking or blocking pressure on said braking disk (10) or to unjam said disk (10) - can be moved axially by two actuators
- one per direction of (braking or unjamming) actuation - or by an actuator (60) for one direction of actuation and a spring system (70) with at least one spring element (71, 72) for the other direction of actuation.

2. The device of claim 1, wherein said intermediate area (21) of said braking disk (10) is comprised of flexible spokes (22, 25, 26).

3. The device of claim 1 or 2, wherein said friction area (31) of said braking disk (10) is comprised of individual segments (37), whereby the slits (38) located between said segments (37) are distributed in the same way as the slits (23) between said spokes (22).

4. The device of claim 1, wherein both friction areas (32, 33) of said braking disk (10) have the same cone angle (34, 35).

5. The device of claim 1, wherein said cone angle (34, 35) lies between 10 and 30 degrees of angle.

6. The device of claim 1, wherein said inner friction surface (33) of said friction area (31) is located opposite said inner brake cone (45) that is affixed on said device casing (40).

7. The device of claim 6, wherein said brake cone (65), that can move in relation to said device casing (40), is maintained in the braking or blocking position by a mechanical spring system (70).

8. The device of claim 6, wherein the actuator (60) used to unjam the braking disk (10) is a pneumatic cylinder-piston-unit.

9. The device of claim 6 and 8, wherein the movable brake cone (65) is part of the piston (61) of the cylinder-piston-unit (60).

## Revendications

1. Dispositif de freinage et/ou de serrage d'un arbre (80) logé dans un carter d'appareillage (90) ou dans le carter du dispositif (40)
- avec un disque de freinage (10) fixé sur ou contre un axe (80) de manière rigide à la torsion, le disque de freinage (10) présentant une zone de bridage (11), une zone intermédiaire (21) et une zone de frottement (31) munie d'au moins une surface de frottement (32) à cône tronqué,
- et avec au moins un cône de freinage (45) logé dans le carter du dispositif (40) contre lequel la surface de frottement (32) vient se placer lors du blocage ou du freinage,
**caractérisé en ce que**
- ladite zone de frottement (31) comporte une surface de frottement externe (32) et interne (33),
- la zone de frottement (31) coulisse en direction axiale (8) par rapport à la zone de bridage (11) le long de la zone intermédiaire (21) qui se trouve entre les deux premières zones (11, 31) et qui est élastique, au moins endroits,
- un cône-frein (65, 45) fait face à chacune de ces deux surfaces de frottement (32, 33),
- le cône-frein ((65) ou (45)) peut se déplacer axialement pour exercer une contrainte de freinage ou de blocage et pour décharger par ventilation ledit disque de freinage (10), soit par l'intermédiaire de deux actionneurs (un par sens d'actionnement en contrainte et en décharge), soit par un actionneur (60) pour un sens d'actionnement et un système à ressort (70) avec au moins un élément à ressort (71, 72) pour l'autre sens d'actionnement.

2. Dispositif selon la revendication 1, **caractérisé en ce que** la zone intermédiaire (21) du disque de freinage (10) est constituée de rayons élastiques (22, 25, 26).

3. Dispositif selon les revendications 1 ou 2, **caractérisé en ce que** la zone de frottement (31) du disque de freinage (10) est constituée de segments séparés (37), les encoches (38) situées entre lesdits segments (37) ayant la même répartition que les encoches (23) entre les rayons (22).

4. Dispositif selon la revendication 1, **caractérisé en ce que** les deux zones de frottement (32, 33) du disque de freinage (10) ont le même angle de cône (34, 35).

5. Dispositif selon la revendication 1, **caractérisé en ce que** l'angle de cône (34, 35) est compris entre 10 et 30 degrés d'angle.

6. Dispositif selon la revendication 1, **caractérisé en ce que** la surface interne de frottement (33) de la zone de frottement (31) fait face au cône-frein interne (45) fixé au carter du dispositif (40).

7. Dispositif selon la revendication 6, **caractérisé en ce que** le cône de freinage (65), qui est mobile relativement au carter du dispositif (40), est maintenu dans la position de freinage et/ou de blocage au moyen d'un système mécanique à ressort (70).

8. Dispositif selon la revendication 6, **caractérisé en ce que** l'actionneur (60) utilisé pour décharger par ventilation le disque de freinage (10) est une unité vérin-piston pneumatique.

9. Dispositif selon les revendications 6 et 8, **caractérisé en ce que** le cône de freinage (65) mobile fait partie du piston (61) de l'unité vérin-piston (60).
